# EUROPÄISCHE PATENTANMELDUNG

(11) **EP 4 818 833 A1**
(43) Veröffentlichungstag der Anmeldung: **07.10.2026**
(21) Anmeldenummer: 25167748.0
(22) Anmeldetag: 01.04.2025
(51) Int. Cl.: G05B 19/418, G05D 1/00

(54) **ANLAGENÜBERWACHUNG**

(71) Anmelder: Primetals Technologies Germany GmbH, 91058 Erlangen (DE)
(72) Erfinder: Falter, Paul Andreas, 90542 Eckental (DE)
(74) Vertreter: Metals@Linz

(57) **Zusammenfassung**

Die vorliegende Erfindung betrifft ein System (10) zur Überwachung von Anlagen (1), insbesondere Stahlwerken, und ein entsprechendes Verfahren (100). Das System (10) weist mehrere über die zu überwachende Anlage (1) verteilte Sendeeinrichtungen (12) zum Aussenden von Ultrabreitband-Signalen (14) auf. Daneben ist eine flugfähige Überwachungsplattform (16) mit einer Überwachungssensorik (18) zum sensorischen Erfassen wenigstens einer Komponente (4a, 4b, 4c) der Anlage (1) und einer Empfängereinrichtung (20) zum Empfangen der Ultrabreitband-Signale (14) vorgesehen. Eine Steuerungsvorrichtung (22) des Systems (10) ist dazu eingerichtet, eine Flugbewegung der Überwachungsplattform (16) auf Grundlage der mit der Empfängereinrichtung (20) empfangenen Ultrabreitband-Signale (14) zu steuern.

## Beschreibung

### Gebiet der Technik

Die vorliegende Erfindung betrifft ein System zur Überwachung von Anlagen, insbesondere Stahlwerken, und ein entsprechendes Verfahren.

### Stand der Technik

In vielen Industrieanlagen, zum Beispiel in Anlagen für die Stahlerzeugung und -verarbeitung oder der chemischen Industrie, müssen auch als Produktionsmaschinen bezeichnete Anlagenkomponenten regelmäßig inspiziert werden. Dies kann zum Beispiel zur Gewährleistung der Betriebssicherheit oder zur frühzeitigen Erkennung von Schäden oder Verschleiß an den Anlagenkomponenten erforderlich oder gewünscht sein. Es sind hierfür verschiedene Herangehensweisen bekannt. Es können beispielsweise optische Kontrollen vorgenommen werden. Hierfür muss Wartungspersonal in der Regel an der zu inspizierenden Komponente arbeiten. Der Einsatz von Wartungspersonal "im Feld" ist aber nicht nur aufwendig, sondern kann das Bedienpersonal auch unnötig einer Gefährdung aussetzen. Diese Gefährdung kann nur umgangen werden, indem die Anlage oder zumindest die entsprechende Anlagenkomponente für die Dauer der Inspektion außer Betrieb genommen wird.

Diese Probleme werden bei einer sensorischen Überwachung umgangen; allerdings ist die Überwachung dann auf die Position der verbauten Sensoren beschränkt. Außerdem müsste hierfür eine Vielzahl von Sensoren aufwändig verbaut werden. Eine umfassende sensorisch gestützte Überwachung ist daher oftmals nicht praktikabel und jedenfalls unwirtschaftlich. Zudem können in Industrieanlagen, insbesondere in Stahlwerken, Umweltbedingungen vorherrschen, in denen fest verbaute Sensoren nur eine begrenzte Lebensdauer haben. Gegebenenfalls ist es auch nicht ohne weiteres möglich, eine geeignete Position zur Installation eines Sensors an der Anlagenkomponente zu finden.

Grundsätzlich kann den voranstehend dargestellten Problemen durch den Einsatz mobiler Sensoren oder Sensorplattformen begegnet werden. Diesbezüglich sind sogenannte Animals bekannt, die sich im Wesentlichen autonom mittels Rädern oder Beinen innerhalb der zu überwachenden Anlage bewegen können. Allerdings können solche bodengebundenen Plattformen möglicherweise nicht alle relevanten Bereiche einer Anlage erreichen. Eine Übertragung auf flugfähige Plattformen wie etwa Drohnen ist nicht ohne weiteres möglich; denn die Navigationssensorik solcher flugfähigen Plattformen setzt üblicherweise Umgebungsbedingungen voraus, die in Industrieanlagen, insbesondere Stahlwerken, oftmals nicht gegeben sind. Hohe Temperaturen, nebelartige Dämpfe und eine Vielzahl von (reflektierenden) Metalloberflächen machen den Einsatz von optischen Sensoren wie Lidar oder Kameras zur Positionsbestimmung unmöglich oder zumindest unzuverlässig; auch Radartechnik oder akustische Sensoren lassen sich aufgrund der Vielzahl von metallischen, reflektierenden Oberflächen in solchen Industrieanlagen nicht zuverlässig einsetzen.

### Zusammenfassung der Erfindung

Es ist daher eine Aufgabe der vorliegenden Erfindung, die Überwachung einer Anlage, insbesondere eines Stahlwerks, zu verbessern, insbesondere weiter zu automatisieren und gleichzeitig flexibel zu gestalten.

Diese Aufgabe wird gelöst durch ein System und ein Verfahren zur Überwachung von Industrieanlagen, insbesondere Stahlwerken, gemäß den unabhängigen Ansprüchen.

Bevorzugte Ausführungsformen sind Gegenstand der abhängigen Ansprüche und der folgenden Beschreibung.

Gemäß einem ersten Aspekt der Erfindung weist das System zur Überwachung von Anlagen, insbesondere Stahlwerken, mehrere über die zu überwachende Anlage verteilte Sendeeinrichtungen zum Aussenden von Ultrabreitband-Signalen (englisch Ultra Wide Band Signal, kurz UWB-Signal) auf. Daneben ist eine flugfähige Überwachungsplattform mit einer Überwachungssensorik zum sensorischen Erfassen wenigstens einer Komponente der Anlage und einer Empfängereinrichtung zum Empfangen der Ultrabreitband-Signale vorgesehen. Eine Steuerungsvorrichtung des Systems ist dazu eingerichtet, eine Flugbewegung der Überwachungsplattform auf Grundlage der mit der Empfängereinrichtung empfangenen Ultrabreitband-Signale, insbesondere autonom, zu steuern.

Ein Ultrabreitband-Signal (UWB-Signal) im Sinne der vorliegenden Erfindung ist vorzugsweise ein Signal mit einer besonders hohen Zahl an Frequenzanteilen. Ein Ultrabreitband-Signal ist insbesondere ein Signal mit einer Frequenzbandbreite von mindestens 500 MHz oder mindestens 20 % des arithmetischen Mittelwerts aus einer unteren und einer oberen Grenzfrequenz des Signals. Die untere Grenzfrequenz ist dabei die tiefste Frequenz des Signals, während die obere Grenzfrequenz die höchste Frequenz des Signals ist. Das Ultrabreitband-Signal weist dabei vorzugsweise Frequenzen im Bereich von 3-10 GHz auf.

Ein Aspekt der Erfindung beruht auf dem Ansatz, eine Überwachungssensorik zur Überwachung von Anlagenkomponenten, insbesondere zu deren Inspektion, auf einer flugfähigen Überwachungsplattform zu installieren und diese mittels Ultrabreitband-Signalen innerhalb der Anlage, zum Beispiel innerhalb einer Produktionshalle, zu navigieren. Entsprechend sind vorzugsweise mehrere, insbesondere mindestens drei, innerhalb der Anlage verteilt angeordnete Sendeeinrichtungen zum Aussenden von UWB-Signalen vorgesehen. Die flugfähige Überwachungsplattform, zum Beispiel eine Drohne, kann dann mittels der UWB-Signale innerhalb der Anlage in drei Dimensionen navigieren oder navigiert werden. Es kann insbesondere eine präzise Positionsbestimmung der Überwachungsplattform, zum Beispiel mittels Triangulation, vorgenommen werden. Dies ist hierbei auch möglich in Umgebungen mit vielen metallischen, reflektierenden Oberflächen und/oder staubiger oder dampfhaltiger Atmosphäre, wo klassische zur Positionserfassung genutzte Sensoren wie Lidar oder Radar versagen.

Durch die Nutzung der UWB-Signale, die zweckmäßigerweise von einer Empfängereinrichtung der Überwachungsplattform empfangen werden oder empfangbar sind, kann insbesondere eine Position der Überwachungsplattform innerhalb der Anlage, zum Beispiel innerhalb einer (Stahl-)Produktionshalle, ermittelt werden. Die so bestimmte Position bzw. die entsprechende Positionsinformation wird dann zweckmäßigerweise der Steuerung der Überwachungsplattform zugrunde gelegt. Damit ist eine Positionierung der Überwachungsplattform auch innerhalb einer Industrieanlage mit einer Auflösung im Millimeterbereich möglich. Eine Überwachungssensorik der Überwachungsplattform kann so in für Wartungspersonal ungefährlicher Weise je nach Bedarf an einer zu inspizierenden bzw. zu überwachenden Anlagenkomponente, z. B. einer Produktionsmaschine wie einer Gießmaschine, einem Walzwerk, einer Entzunderungsvorrichtung, einer Kühlstrecke, einer Haspel und/oder dergleichen, positioniert werden. Die Überwachungsplattform muss dabei lediglich für die Dauer der Überwachung bzw. Inspektion eingesetzt werden; die Überwachungssensorik oder, allgemeiner, die gesamte Überwachungsplattform muss damit nicht dauerhaft extremen, der Lebensdauer der Überwachungssensorik und/oder der Überwachungsplattform abträglichen Umwelteinflüssen ausgesetzt werden. Die Überwachung der Anlagenkomponenten kann autonom erfolgen. Dabei muss die Anlage nicht zu Inspektionszwecken heruntergefahren werden; vielmehr kann die Überwachung im laufenden Betrieb erfolgen.

Beispielsweise kann eine mit einer Kamera ausgestattete Überwachungsplattform zur Oberflächenprüfung von Walzen eines Walzwerks in einer Walzstraße nach einem Problem in der Produktionslinie, zum Beispiel einem sogenannte Hochgeher, eingesetzt werden. Ebenso ist es denkbar, eine Überwachungsplattform bei einem Verdacht auf Gasaustritt mit einem Gassensor auszustatten und autonom an eine Überwachungsposition im Bereich des vermuteten Gasaustritts zu fliegen bzw. fliegen zu lassen. Die Überwachungsplattform kann dann dort Messungen durchführen und anschließend autonom zurückfliegen. Grundsätzlich sind aber auch viele weitere Sensortypen zum Einsatz als oder als Teil der Überwachungssensorik denkbar, zum Beispiel thermische Sensoren, etwa thermische Kameras, Akustiksensoren oder/und dergleichen. Bei Bedarf können auch mehrere dieser Sensoren kombiniert werden.

Vorzugsweise werden die bei der Überwachung gesammelten Daten autonom bzw. automatisch ausgewertet, etwa durch ein sog. Computer-Vision-System bzw. künstliche Intelligenz. Dadurch können bestimmte Anlagenzustände, zum Beispiel Anlagenprobleme wie Leckagen oder dergleichen, automatisiert erkannt werden.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

In einer bevorzugten Ausführungsform ist eine Luftschnittstelle vorgesehen, über welche die Steuerungsvorrichtung und die Überwachungsplattform miteinander signal- oder datenverbunden sind. Eine solche Luftschnittstelle kann beispielsweise in Form einer Funkverbindung, etwa einem lokalen drahtlosen Netzwerk (WLAN), vorgesehen sein. Vorzugsweise ist die Steuerungsvorrichtung dazu eingerichtet, eine Flugbewegung der Überwachungsplattform auf Grundlage der empfangenen Ultrabreitband-Signale entlang eines vorbestimmten, d. h. festgelegten, Überwachungspfades zu steuern. Aufgrund der Luftschnittstelle kann die Steuerungsvorrichtung separat von der Überwachungsplattform ausgebildet sein. Dadurch ist es möglich, eine hohe Rechenleistung vorzusehen, ohne dass die Überwachungsplattform zum Beispiel durch das Gewicht der entsprechenden Rechen-Infrastruktur zusätzlich belastet wird. Die Steuerungsvorrichtung kann beispielsweise in einem Rechenzentrum oder als Server vorgesehen sein. Laufzeitbedingt ist die Steuerungsvorrichtung vorzugsweise innerhalb der Anlage, etwa in einem Steuerungsraum bzw. einem sogenannten "Cockpit", angeordnet. Die Steuerungsvorrichtung kann dazu eingerichtet sein, ein Abkommen der Überwachungsplattform vom Überwachungspfad anhand der UWB-Signale zu erkennen. In diesem Fall ist die Steuerungsvorrichtung vorzugsweise auch dazu eingerichtet, entsprechend gegenzusteuern bzw. eine entsprechende Kurskorrektur vorzunehmen oder zu veranlassen. Auf diese Weise können zuverlässig alle relevanten Anlagenkomponenten, insbesondere autonom, ange- oder überflogen und dabei zu Überwachungszwecken sensorisch erfasst werden.

In einer weiteren bevorzugten Ausführungsform ist die Steuerungsvorrichtung dazu eingerichtet, auf Grundlage der empfangenen Ultrabreitband-Signale eine Position der Überwachungsplattform in der zu überwachenden Anlage, insbesondere der Produktionshalle, zu ermitteln. Vorzugsweise ist die Steuerungsvorrichtung zusätzlich dazu eingerichtet, zu prüfen, ob die ermittelte Position ein vorbestimmtes Positionskriterium erfüllt. Beispielsweise kann die Steuerungsvorrichtung dazu eingerichtet sein, zu prüfen, ob die ermittelte Position mit dem vorbestimmten Überwachungspfad korrespondiert oder davon abweicht. Ist dies der Fall, kann gegebenenfalls eine Kurskorrektur vorgenommen oder veranlasst werden. Insbesondere kann durch die Positionsbestimmung eine autonome Navigation der Überwachungsplattform in der zu überwachenden Anlage, insbesondere Produktionshalle, erfolgen. Es ist daher kein menschliches Eingreifen mehr nötig, um eine zuverlässige Überwachung der Anlagenkomponenten zu gewährleisten.

In einer weiteren bevorzugten Ausführungsform weist eine bewegliche Anlagenkomponente oder weisen mehrere bewegliche Anlagenkomponenten jeweils eine weitere Empfängereinrichtung zum Empfangen der Ultrabreitband-Signale auf. Dadurch ist es möglich, die gegenwärtige Position dieser Anlagenkomponenten bei Bedarf, insbesondere im Wesentlichen kontinuierlich, zu ermitteln. Dies kann einer Kollisionsvermeidung mit der Überwachungsplattform zugrunde gelegt werden. Entsprechend ist die Steuerungsvorrichtung vorzugsweise dazu eingerichtet, die Flugbewegung der Überwachungsplattform zusätzlich auf Grundlage der mit der einen weiteren Empfängereinrichtung oder mit den weiteren Empfängereinrichtungen empfangenen Ultrabreitband-Signalen, insbesondere autonom, zu steuern. Die Position von beweglichen Anlagenkomponenten wie zum Beispiel Kränen oder Greifarmen kann dadurch bei der Steuerung der Überwachungsplattform berücksichtigt werden. Dadurch lässt sich die Betriebssicherheit der Anlage, insbesondere der Überwachungsplattform, deutlich erhöhen und ein Unfallrisiko reduzieren.

In einer weiteren bevorzugten Ausführungsform weist die Überwachungsplattform eine Umgebungssensorik zum sensorischen Erfassen einer Umgebung der Überwachungsplattform auf. Die Überwachungsplattform kann beispielsweise mit einer oder mehreren zusätzlichen optischen Kameras, Lidar- oder Radar-Sensoren ausgestattet sein. Die Daten dieser Sensorik können ebenfalls oder zusätzlich zur Kollisionsvermeidung der Überwachungsplattform mit Anlagenkomponenten, insbesondere sich bewegenden Anlagenkomponenten, eingesetzt werden. Entsprechend ist die Steuerungsvorrichtung vorzugsweise dazu eingerichtet, die Flugbewegung der Überwachungsplattform zusätzlich auf Grundlage von Sensordaten, welche mittels der Umgebungssensorik beim Erfassen der Umgebung der Überwachungsplattform erzeugt werden, zu steuern. So können auch unvorhergesehen eintretende Situationen, zum Beispiel unvorhergesehene Änderungen der Umgebung, erkannt werden. Durch eine entsprechende Steuerung der Überwachungsplattform bzw. dem Veranlassen eines entsprechenden Flugmanövers können solche Situationen entschärft werden. Es ist also eine verbesserte, insbesondere sicherere, Steuerung der Plattform möglich. Die Überwachungsplattform kann dadurch insbesondere "intelligent" geflogen werden.

In einer weiteren bevorzugten Ausführungsform weist die Umgebungssensorik wenigstens einen Sensor zum Erfassen von Hindernissen in der Umgebung der Überwachungsplattform, insbesondere von Hindernissen auf dem vorbestimmten Überwachungspfad, auf. Entsprechend umfasst die Umgebungssensorik vorzugsweise einen Lidar- oder anderen optischen Sensor. Die bei der Erfassung solcher Hindernisse erzeugten Sensordaten können zur Vermeidung von Kollisionen, etwa mit beweglichen Anlagenkomponenten wie Kränen oder dergleichen, genutzt werden.

Gemäß einem zweiten Aspekt der Erfindung weist das Verfahren zur Überwachung von Anlagen, insbesondere Stahlwerken, auf: i) Aussenden von Ultrabreitband-Signalen mittels mehrerer über eine zu überwachende Anlage verteilter Sendeeinrichtungen; ii) Empfangen der Ultrabreitband-Signale mittels einer Empfängereinrichtung einer flugfähigen Überwachungsplattform; iii) insbesondere autonomes Steuern einer Flugbewegung der Überwachungsplattform mittels einer Steuerungsvorrichtung auf Grundlage der mit der Empfängereinrichtung empfangenen Ultrabreitband-Signale; und iv) insbesondere gleichzeitiges sensorisches Erfassen wenigstens einer Komponente der Anlage mittels einer Überwachungssensorik der Überwachungsplattform.

Durch die Verwendung von Ultrabreitband-Sensoren zur Positionsbestimmung bzw. Navigation innerhalb einer Anlage, z. B. einer Produktionshalle eines Stahlwerks, ist eine reproduzierbare Positionierung der Überwachungsplattform mit Millimeterauflösung innerhalb der Anlage möglich. Die über die zu überwachende Anlage verteilten Sendeeinrichtungen können dabei als sogenannte Anker (engl. Anchor) dienen. Die Positionsbestimmung der Überwachungsplattform kann dann über Triangulation erfolgen. Die Sendeeinrichtungen ermöglichen also, die Position der Überwachungsplattform im dreidimensionalen Raum genau zu bestimmen und zum Beispiel einen vorgegebenen Überwachungspfad oder -weg autonom abzufliegen. Anhand der mit der Empfangseinrichtung empfangenen Ultrabreitband-Signale "weiß" die Überwachungsplattform bzw. die Steuerungsvorrichtung, welche der Steuerung der Überwachungsplattform dient, zweckmäßigerweise zu jeder Zeit, wo sich die Überwachungsplattform innerhalb der Anlage befindet.

Das Aussenden und Empfangen von Ultrabreitband-Signalen hat dabei den Vorteil, dass diese Signale zum Beispiel an metallischen Oberflächen, wie sie in industriellen Anlagen, zum Beispiel Stahlwerken, häufig auftreten, deutlich weniger stark reflektiert werden als beispielsweise Licht im sichtbaren Spektrum. In diesem Sinne können sich die Ultrabreitband-Signale also ungestörter innerhalb der Anlage ausbreiten. Darüber hinaus sind diese Signale auch nicht oder weniger stark durch eine unsaubere Atmosphäre, zum Beispiel Rauch oder Dampf, beeinträchtigbar. Infolgedessen kann eine Überwachungsplattform unter der Verwendung von Ultrabreitband-Signalen also auch in Umgebungen eingesetzt werden, in denen klassische Positionsbestimmungs- oder Navigationsmittel, zum Beispiel Lidar, Radar oder optische Kameras, Versagen.

In einer bevorzugten Ausführungsform wird die Flugbewegung der Überwachungsplattform auf Grundlage der empfangenen Ultrabreitband-Signale derart gesteuert, dass die Überwachungssensorik der Überwachungsplattform autonom in drei Dimensionen innerhalb der Anlage zur sensorischen Überwachung der Komponenten der Anlage an einer oder mehreren vorbestimmten Überwachungspositionen positioniert wird. Die Flugbewegung kann also zum Beispiel so gesteuert werden, dass die Überwachungsplattform einem vorbestimmten, d. h. festgelegten, Überwachungspfad folgt, der an den zu überwachenden Anlagenkomponenten vorbei führt. Es können dadurch mehrere Überwachungspositionen, die zweckmäßigerweise auf dem Überwachungspfad liegen, nacheinander angeflogen werden. Zweckmäßigerweise können solche Überwachungspositionen während des Betriebs der Überwachungsplattform, d. h. während des Fluges, noch vorgegeben oder geändert werden. Dadurch lässt sich die Überwachungssensorik unabhängig von der Anlagen-Infrastruktur und flexibel positionieren.

In einer weiteren bevorzugten Ausführungsform werden die Ultrabreitband-Signale mittels der Sendeeinrichtungen im Wesentlichen kontinuierlich ausgesendet und mittels der Empfängereinrichtung im Wesentlichen kontinuierlich empfangen. Die Position der Überwachungsplattform innerhalb der Anlage, zum Beispiel der Produktionshalle, kann durchgehend nachverfolgt und Abweichungen von einem vorbestimmten Überwachungspfad unmittelbar festgestellt - und gegebenenfalls korrigiert - werden.

In einer weiteren bevorzugten Ausführungsform werden beim Überwachen der Komponenten der Anlage mittels der Überwachungssensorik erzeugte Überwachungsdaten einer Anlagensteuerung zur Verfügung gestellt. Zweckmäßigerweise wird die Anlage oder zumindest ein Teil der Anlage, insbesondere wenigstens eine der überwachten Komponenten, auf Grundlage der Überwachungsdaten gesteuert. Es können also die Überwachungsergebnisse auch in die Automatisierung der Anlage mit einbezogen bzw. bei einer Steuerung der Anlage berücksichtigt werden. So lassen sich gegebenenfalls Durchsatz und/oder Produktqualität verbessern und ungeplante Stillstände vermeiden oder zumindest reduzieren.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- Fig 1: ein Beispiel eines System zum Überwachen einer Anlage; und
- Fig 2: ein Beispiel eines Verfahrens zum Überwachen einer Anlage.

Soweit zweckdienlich, werden in den Figuren dieselben Bezugszeichen für dieselben oder einander entsprechende Elemente der Erfindung verwendet.

### Beschreibung der Ausführungsformen

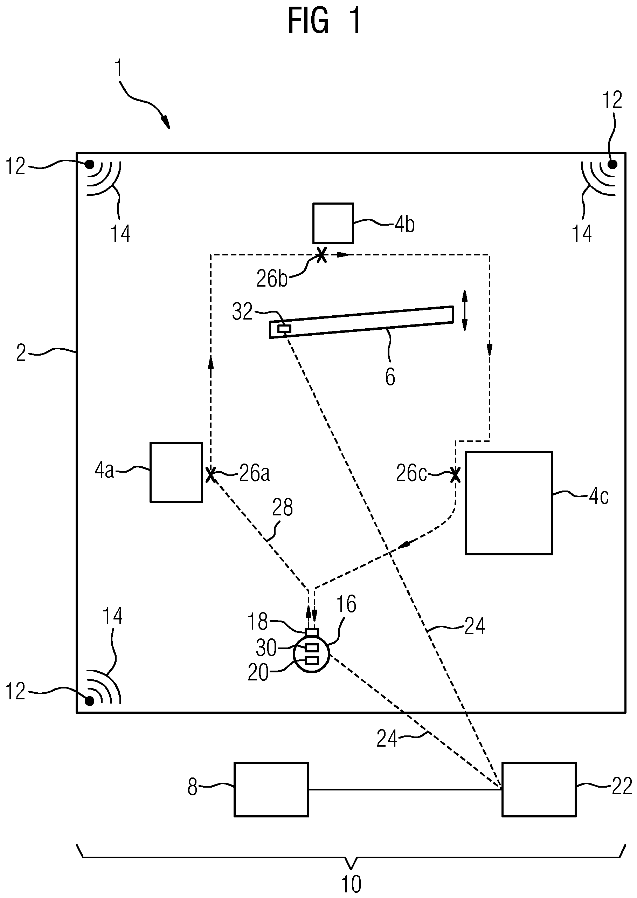

FIG 1 zeigt ein Beispiel eines Systems 10 zum Überwachen einer Anlage 1, insbesondere eines Stahlwerks. Die Anlage 1 umfasst eine Produktionshalle 2, in der mehrere zu überwachende Anlagenkomponenten 4a, 4b, 4c sowie weitere, möglicherweise auch - wie durch den doppelköpfigen Pfeil angedeutet - bewegliche Anlagenkomponenten 6 angeordnet sind, und eine Anlagensteuerung 8 zur Steuerung wenigstens einer der Anlagenkomponenten 4a, 4b, 4c, 6, z. B. des Produktionsprozesses in der Anlage 1. Das System 10 weist mehrere Sendeeinrichtungen 12 zum Aussenden von Ultrabreitband-Signalen 14, eine flugfähige Überwachungsplattform 16 mit einer Überwachungssensorik 18 und einer Empfängereinrichtung 20 sowie eine Steuerungsvorrichtung 22 auf. Die Steuerungsvorrichtung 22 ist mit der Überwachungsplattform 16 über eine Luftschnittstelle 24, zum Beispiel eine WLAN-Verbindung, signal- oder datenverbunden.

Die Sendeeinrichtungen 12 sind zweckmäßigerweise über die Anlage 1, d. h. zum Beispiel innerhalb der Produktionshalle 2, räumlich verteilt. Die Sendeeinrichtungen 12 sind dabei vorzugsweise derart positioniert, dass die Überwachungsplattform 16, insbesondere die Empfängereinrichtung 20, im Wesentlichen an jeder Position innerhalb der Anlage 1, insbesondere der Produktionshalle 2, die ausgesandten Ultrabreitband-Signale 14 von wenigstens drei Sendeeinrichtungen 12 empfangen kann. Hierzu ist es besonders zweckdienlich, die Sendeeinrichtungen 12 in einer erhöhten Position, zum Beispiel unterhalb eines Daches der Produktionshalle 2, an den Wänden der Produktionshalle 2 oder auf dedizierten Masten, zu montieren.

Die ausgesandten Ultrabreitband-Signale, die zweckmäßigerweise im Frequenzbereich zwischen 3,1 und 10,6 GHz liegen und eine Bandbreite von mindestens 500 MHz oder 20% des arithmetischen Mittels von oberer und unterer Grenzfrequenz aufweisen, werden von metallischen Oberflächen der Anlagenkomponenten 4a, 4b, 4c, 6 und/oder den Hallenwänden nicht oder nur geringfügig beeinflusst. Ebenso sind diese Ultrabreitband-Signale 14 im Vergleich zu Radar-Funksignalen oder Strahlung mit Wellenlängen in der Größenordnung des sichtbaren Spektrums im Wesentlichen unempfindlich gegenüber einer dampf- oder staubbelasteten Atmosphäre innerhalb der Anlage 1. Die Ultrabreitband-Signale 14 können daher von der Empfängereinrichtung 20 auf der flugfähigen Überwachungsplattform 16, zum Beispiel einer Drohne, empfangen werden, wenn es sich bei der Anlage 1 um eine industrielle Anlage, etwa ein Stahlwerk, handelt.

Die Steuerungsvorrichtung 22 ist zweckmäßigerweise dazu eingerichtet, eine Flugbewegung der Überwachungsplattform 16 auf Grundlage der mit der Empfängereinrichtung 20 empfangenen Ultrabreitband-Signale 14 zu steuern. Die Steuerungsvorrichtung 22 kann beispielsweise dazu eingerichtet sein, die Position der Überwachungsplattform 16 innerhalb der Anlage 1, insbesondere innerhalb der Produktionshalle 2, anhand der empfangenen Ultrabreitband-Signale 14 zu ermitteln. Zweckmäßigerweise wird hierzu ein Triangulationsverfahren eingesetzt, welches sich beispielsweise auf Laufzeitmessungen der Ultrabreitbandsignale 14 stützt. Entsprechend kann die Überwachungsplattform 16, insbesondere die Empfängereinrichtung 20, dazu eingerichtet sein, die empfangenen Ultrabreitband-Signale 14 mit einem Zeitstempel zu versehen und über die Luftschnittstelle 24 weiter an die Steuerungsvorrichtung 22 zu senden. Die Steuerungsvorrichtung 22 kann diese Signale dann auswerten und daraufhin, über die Luftschnittstelle 24, eine entsprechende Steuerung der Überwachungsplattform 16 vornehmen oder veranlassen. Dadurch ist es zum Beispiel möglich, die Überwachungsplattform 16 präzise an vorbestimmte Überwachungspositionen 26a, 26b, 26c zu fliegen bzw. eine Positionierung an diesen Überwachungspositionen 26a, 26b, 26c zu überwachen. An den Überwachungspositionen 26a, 26b, 26c kann dann diejenige Anlagenkomponente 4a, 4b, 4c, der die entsprechende Überwachungsposition 26a, 26b, 26c zugeordnet ist, mittels der Überwachungssensorik 18 sensorisch erfasst, d. h. eine sensorische Inspektion vorgenommen, werden.

Die Überwachungspositionen 26a, 26b, 26c liegen zweckmäßigerweise auf einem vorbestimmten Überwachungspfad 28, den die Überwachungsplattform 16 bei der Überwachung der Anlage 1 abfliegt. Der Überwachungspfad 28 kann dabei derart vorgegeben sein, dass etwaige Hindernisse, beispielsweise weitere Anlagenkomponenten 6, umflogen werden. Der Überwachungspfad 28 kann auf eine Routineüberwachung der Anlage 1 abgestimmt sein; es ist aber auch denkbar, dass der Überwachungspfad 28 oder jedenfalls eine Überwachungsposition 26a, 26b, 26c vorgegeben wird, wenn eine Fehlfunktion der Anlage 1 registriert wird. Die Überwachungsplattform 16 kann dann von der Steuerungsvorrichtung 22 autonom an die vorgegebene Überwachungsposition 26a, 26b, 26c manövriert und nach erfolgter Inspektion an den Ausgangspunkt zurückgeflogen werden.

Da die Anlage 1, wie im vorliegenden Beispiel gezeigt, auch bewegliche Anlagenkomponenten 6 aufweisen kann, deren Position beim Festlegen des Überwachungspfad 28 nicht bekannt ist, weist die Überwachungsplattform 16 vorzugsweise eine Umgebungssensorik 30 zum Erfassen einer Umgebung der Überwachungsplattform 16 auf. Die bei der Erfassung der Umgebung von der Umgebungssensorik 30 erzeugten Sensordaten werden zweckmäßigerweise ebenfalls, nach Übermittlung über die Luftschnittstelle 24, von der Steuerungsvorrichtung 22 ausgewertet, auch wenn eine Auswertung an Bord der Überwachungsplattform 16 grundsätzlich ebenfalls denkbar ist. In jedem Fall werden diese Sensordaten bzw. deren Auswertung der Steuerung der Überwachungsplattform 16 vorteilhaft zugrunde gelegt. Mittels der Umgebungssensorik 30 können nämlich bewegliche Hindernisse, zum Beispiel Kräne oder (Roboter-) Arme und/oder dergleichen, erkannt werden. Die von der Umgebungssensorik 30 erzeugten Sensordaten können infolgedessen einer Kollisionsvermeidung dienen.

Alternativ oder zusätzlich kann die Position solcher beweglichen Anlagenkomponenten 6 auch "aktiv" ermittelt werden. Zweckmäßigerweise ist hierfür die bewegliche Anlagenkomponente 6, bei der potentiell die Gefahr einer Kollision mit der Überwachungsplattform 16 besteht, mit einer weiteren Empfängereinrichtung 32 ausgestattet. Diese weitere Empfängereinrichtung 32 steht zweckmäßigerweise mit der Steuerungsvorrichtung 22 in einer Signal- oder Datenverbindung, zum Beispiel ebenfalls über die Luftschnittstelle 24. Anhand der von der weiteren Empfängereinrichtung 32 empfangenen Ultrabreitband-Signale 14 kann die Steuerungsvorrichtung 22 die Position der beweglichen Anlagenkomponenten 6 innerhalb der Anlage 1, insbesondere der Produktionshalle 2, ermitteln. Die Position der weiteren Anlagenkomponente 6 kann dadurch, sogar ohne dass die Überwachungsplattform 16 mithilfe einer Umgebungssensorik 30 ihre Umgebung sensorisch erfasst, bei der Steuerung der Überwachungsplattform 16 berücksichtigt und so eine Kollision vermieden werden.

Die Überwachungssensorik 18 kann ein oder eine Vielzahl von, gegebenenfalls auch verschiedenen, Sensoren umfassen. Zu solchen Sensoren gehören optische Kameras, Gassensoren, thermische Sensoren, thermische Kameras und Akustiksensoren. Die beim sensorischen Erfassen der Anlagenkomponenten 4a, 4b, 4c von der Überwachungssensorik 18 erzeugten Überwachungsdaten können, z. B. über die Luftschnittstelle 24, Bedienpersonal der Anlage 1 zur Verfügung gestellt werden. Beispielswiese können entsprechende Messwerte oder Kamerabilder auf einer Anzeigevorrichtung in einem Leitstand der Anlage 1 angezeigt werden.

Alternativ oder zusätzlich kann eine Auswertung der Überwachungsdaten aber auch direkt an Bord der Überwachungsplattform 16 oder durch die Steuerungsvorrichtung 22 erfolgen. Dadurch kann insbesondere die Steuerungsvorrichtung 22 die Überwachung der Anlage 1, insbesondere der Anlagenkomponenten 4a, 4b, 4c, im Wesentlichen vollständig autonom übernehmen.

Beispielsweise kann die Steuerungsvorrichtung dazu eingerichtet sein, anhand der Überwachungsdaten den Zustand der jeweiligen Anlagenkomponente 4a, 4b, 4c zu ermitteln und gegebenenfalls mit einem vorbestimmten Normalzustand zu vergleichen. Hierzu kann die Steuerungsvorrichtung 22 eine KI bzw. einen sogenannten digitalen Assistenten, der auf maschinellem Lernen basiert, verfügen. Weicht der ermittelte Zustand von dem Normalzustand ab, kann Bedienpersonal alarmiert oder direkt eine manuelle Wartung bzw. Reparatur der entsprechenden Anlagenkomponente 4a, 4b, 4c, gegebenenfalls nach deren Stilllegung, in die Wege geleitet werden.

Hierzu ist es vorteilhaft, wenn die Steuerungsvorrichtung 22 mit der Anlagensteuerung 8 kommunizieren kann. Gegebenenfalls kann die Steuerungsvorrichtung 22 in diesem Fall die Überwachungsdaten auch der Anlagensteuerung 8 zur Verfügung stellen, damit die Anlagensteuerung 8 die Überwachungsdaten in die Steuerung der Anlage1, insbesondere der Anlagenkomponenten 4a, 4b, 4c, 6, mit einbeziehen kann. Beispielsweise kann der Produktionsprozess an den anhand der Überwachungsdaten ermittelten Zustand einer oder mehrerer Anlagenkomponenten 4a, 4b, 4c angepasst werden.

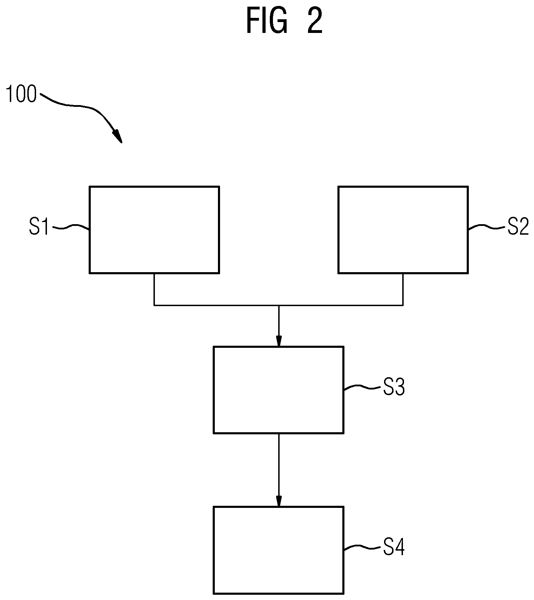

FIG 2 zeigt ein Beispiel eines Verfahrens 100 zur Überwachung von Anlagen, insbesondere Stahlwerken.

In einem Verfahrensschritt S1 werden Ultrabreitband-Signale mittels mehrerer über die zu überwachende Anlage verteilter Sendeeinrichtungen ausgesandt. In einem weiteren Verfahrensschritt S2 werden diese Ultrabreitband-Signale mittels einer Empfängereinrichtung einer flugfähigen Überwachungsplattform empfangen. Auf Grundlage der empfangenen Ultrabreitband-Signale kann in einem weiteren Verfahrensschritt S3 eine Flugbewegung der Überwachungsplattform, insbesondere autonom, gesteuert werden. Zweckmäßigerweise wird dann in einem weiteren Verfahrensschritt S4 wenigstens eine Komponente der Anlage mittels einer Überwachungssensorik der Überwachungsplattform sensorisch erfasst.

Die Verfahrensschritte S1, S2 und S3 werden zweckmäßigerweise im Wesentlichen kontinuierlich durchgeführt. Dadurch kann durchgängig überwacht werden, ob sich die Überwachungsplattform zum Beispiel wie gewünscht entlang eines vorgegebenen Überwachungspfades bewegt, an einer vorgegebenen Überwachungsposition positioniert ist oder vom Überwachungspfad bzw. der Überwachungsposition abkommt bzw. abgekommen ist. Gegebenenfalls kann so im Verfahrensschritt S3 die Flugbewegung der Überwachungsplattform entsprechend korrigiert werden.

Der Verfahrensschritt S4 kann gegebenenfalls gleichzeitig mit dem Verfahrensschritt S3 ausgeführt werden; d. h., die wenigstens eine Anlagenkomponente kann während der Steuerung der Überwachungsplattform, also beispielsweise im Vorbeiflug an der Anlagenkomponente oder während die Überwachungsplattform auf einer vorbestimmten Überwachungsposition gehalten wird, sensorisch erfasst werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Anlage
- 2: Produktionshalle
- 4a, 4b, 4c: Anlagenkomponente
- 6: weitere (bewegliche) Anlagenkomponente
- 8: Anlagensteuerung

- 10: System
- 12: Sendeeinrichtung
- 14: Ultrabreitband-Signal
- 16: Überwachungsplattform
- 18: Überwachungssensorik
- 20: Empfängereinrichtung
- 22: Steuerungsvorrichtung
- 24: Luftschnittstelle
- 26a,26b, 26c: Überwachungsposition
- 28: Überwachungspfad
- 30: Umgebungssensorik
- 32: weitere Empfängereinrichtung

- 100: Verfahren
- S1: Aussenden
- S2: Empfangen
- S3: Steuern
- S4: Erfassen

## Patentansprüche

1. System (10) zur Überwachung von Anlagen (1), insbesondere Stahlwerken, aufweisend:
- mehrere über eine zu überwachende Anlage (1) verteilte Sendeeinrichtungen (12) zum Aussenden von Ultrabreitband-Signalen (14);
- eine flugfähige Überwachungsplattform (16) mit einer Überwachungssensorik (18) zum sensorischen Erfassen wenigstens einer Komponente (4a, 4b, 4c) der Anlage (1) und einer Empfängereinrichtung (20) zum Empfangen der Ultrabreitband-Signale (14);
- einer Steuerungsvorrichtung (22), die dazu eingerichtet ist, eine Flugbewegung der Überwachungsplattform (16) auf Grundlage der mit der Empfängereinrichtung (20) empfangenen Ultrabreitband-Signale (14) zu steuern.

2. System (10) nach Anspruch 1, aufweisend eine Luftschnittstelle (24), über welche die Steuerungsvorrichtung (22) und die Überwachungsplattform (16) miteinander signal- oder datenverbunden sind, wobei die Steuerungsvorrichtung (22) dazu eingerichtet ist, eine Flugbewegung der Überwachungsplattform (16) auf Grundlage der empfangenen Ultrabreitband-Signale (14) entlang eines vorbestimmten Überwachungspfades (28) zu steuern.

3. System (10) nach Anspruch 1 oder 2, wobei die Steuerungsvorrichtung (22) dazu eingerichtet ist, auf Grundlage der empfangenen Ultrabreitband-Signale (14) eine Position der Überwachungsplattform (16) in der zu überwachenden Anlage (1) zu ermitteln und zu prüfen, ob die ermittelte Position ein vorbestimmtes Positionskriterium erfüllt.

4. System (10) nach einem der vorangehenden Ansprüche, wobei eine oder mehrere bewegliche Anlagenkomponenten (6) jeweils eine weitere Empfängereinrichtung (32) zum Empfangen der Ultrabreitband-Signale (14) aufweisen und die Steuerungsvorrichtung (22) dazu eingerichtet ist, die Flugbewegung der Überwachungsplattform (16) zusätzlich auf Grundlage der mit der einen weiteren Empfängereinrichtung (32) oder mit den weiteren Empfängereinrichtungen (32) empfangenen Ultrabreitband-Signalen (14) zu steuern.

5. System (10) nach einem der vorangehenden Ansprüche, wobei die Überwachungsplattform (16) eine Umgebungssensorik (30) zum sensorischen Erfassen einer Umgebung der Überwachungsplattform (16) aufweist und die Steuerungsvorrichtung (22) dazu eingerichtet ist, die Flugbewegung der Überwachungsplattform (16) zusätzlich auf Grundlage von Sensordaten, welche mittels der Umgebungssensorik (30) beim Erfassen der Umgebung der Überwachungsplattform (16) erzeugt werden, zu steuern.

6. System (10) nach Anspruch 5, wobei die Umgebungssensorik (30) wenigstens einen Sensor zum Erfassen von Hindernissen in der Umgebung der Überwachungsplattform (16) aufweist.

7. Verfahren (100) zur Überwachung von Anlagen (1), insbesondere Stahlwerken, aufweisend:
- Aussenden (S1) von Ultrabreitband-Signalen (14) mittels mehrerer über eine zu überwachende Anlage (1) verteilter Sendeeinrichtungen (12);
- Empfangen (S2) der Ultrabreitband-Signale (14) mittels einer Empfängereinrichtung (20) einer flugfähigen Überwachungsplattform (16);
- Steuern (S3) einer Flugbewegung der Überwachungsplattform (16) mittels einer Steuerungsvorrichtung (22) auf Grundlage der mit der Empfängereinrichtung (20) empfangenen Ultrabreitband-Signale (14); und
- sensorisches Erfassen (S4) von Komponenten (4a, 4b, 4c) der Anlage (1) mittels einer Überwachungssensorik (18) der Überwachungsplattform (16).

8. Verfahren (100) nach Anspruch 7, wobei die Flugbewegung der Überwachungsplattform (16) auf Grundlage der empfangenen Ultrabreitband-Signale (14) derart gesteuert wird, dass die Überwachungssensorik (18) der Überwachungsplattform (16) autonom in drei Dimensionen innerhalb der Anlage (1) zur sensorischen Überwachung wenigstens einer Komponente (4a, 4b, 4c) der Anlage (1) an einer oder mehreren vorbestimmten Überwachungspositionen (26a, 26b, 26c) positioniert wird.

9. Verfahren (100) nach Anspruch 7 oder 8, wobei die Ultrabreitband-Signale (14) mittels der Sendeeinrichtungen (12) im Wesentlichen kontinuierlich ausgesendet und mittels der Empfängereinrichtung (20) im Wesentlichen kontinuierlich empfangen werden.

10. Verfahren (100) nach einem der Ansprüche 7 bis 9, wobei beim Überwachen der Komponenten (4a, 4b, 4c) der Anlage (1) mittels der Überwachungssensorik (18) erzeugte Überwachungsdaten einer Anlagensteuerung (8) zur Verfügung gestellt und die Anlage (1) oder zumindest ein Teil der Anlage (1) auf Grundlage der Überwachungsdaten gesteuert wird.
